# EUROPEAN PATENT SPECIFICATION

(11) **EP 0 572 472 B1**
(45) Date of publication and mention of the grant of the patent: **31.07.1996**
(21) Application number: 92905045.8
(22) Date of filing: 20.02.1992
(51) Int. Cl.: C09D 7/00, C09D 5/03

(54) **COATING POWDERS**
Beschichtungspulver
POUDRES DE REVETEMENT

(30) Priority: 20.02.1991 GB 9103544
(43) Date of publication of application: 08.12.1993
(73) Proprietor: ALCAN INTERNATIONAL LIMITED, Montreal Quebec H3A 3G2 (CA)
(72) Inventor: HOPKINS, Alan Charles, Marlow, Bucks SL7 2RG (GB); AZIZIAN, Farid, Bicester Oxon OX6 7FQ (GB)
(74) Representative: Pennant, Pyers
(86) International application number: GB9200303
(87) International publication number: WO9214792

(56) References cited:
- EP-A- 0 165 207
- DE-A- 2 742 713
- US-A- 4 329 269

## Description

This invention relates to thermosetting polyester resin coating powders. These are typically based on a comminuted resin/pigment formulation and are typically applied by fluidized bed coating or electrostatic spray coating followed by stoving. Coating powders have various advantages over liquid paints; they are essentially 100% non-volatile, no solvents or pollutants being given off during application or curing; they are easily applied by unskilled operators and automatic systems; the finish is tougher and more abrasion resistant than that of most liquid paints; the material is well utilised, overspray is easily collected and re-applied. An increasing share of the total paint market is now being supplied by powder coating processes. In this specification, the term coating powder refers to the material and the term powder coating to the process and the applied film.

This invention is concerned with agents which modify the surface finish of the cured coating. There follows a brief review of the current situation relating to commercially available matting agents for the production of reduced gloss finishes.

For many decorative powder applications the preferred finish has a lower level of gloss than that which could be obtained without a matting agent. It is felt by designers that a reduced gloss finish has a better aesthetic appeal than a highly reflective glossy surface which does tend to mirror all film defects.

Reduction in gloss can be achieved by incorporation of certain fillers, polyethylene and other waxes, and by physical and chemical incompatibility.

Generally, the effect of fillers is not marked since the matting effect which is apparent in wet paints cannot be simulated by the hot melt compounding technique. If sufficient filler is added to affect the gloss level this is usually accompanied by a reduction in film flow properties. The presence of cheap fillers can also affect the exterior durability of coatings.

Waxy materials tend to sit in the surface of the stoved film where they impart slip and a gloss reduction due to light scattering of the individual particles. This is the technique of producing a very fine texture which has the visual effect of matting the film. But wax spoils mar resistance and gives rise to a thermal break problem if a sealant is applied.

Physical incompatibility caused by the mixture of standard powder resins with such incompatible resins as neoprene, can reduce gloss but often adversely affects the mechanical properties of the cured film.

Reducing the gloss level of exterior durable coatings based on polyester resins requires a different and often troublesome technique. It is necessary to combine polyester systems which use both carboxylated and hydroxylated polymers. The carboxylated types are cured with TGIC and the hydroxylated types with a blocked isocyanate. If compounded together in the extruder they do not produce the optimum matting effect. It is, therefore, necessary to extrude the two types separately and to premix the extrudate flakes prior to fine grinding. This technique will give a smooth low gloss finish of 20-30% but it is almost impossible to achieve a true matt finish (below 10%). This technique increases the labour costs during manufacture and, in the case of coloured coatings, the two components have to be exactly colour matched prior to blending.

There is a need for better matting agents for thermosetting polyester resin coating powders. This invention results from the finding that aluminium organic compounds can fulfil that need.

SU 730716 describes metal organic compounds, including aluminium organic compounds, as coaccelerators with zinc compounds for dicyandiamide hardeners in epoxy resin coating powders.

Transition metal or aluminium compounds are used in JP 53073225 as curing agents for hydroxyl group containing polyester or acrylic resins.

The polyester/epoxy system of European Patent Application EPO 165207 contains a combination of a wax and a metal salt or metal complex of an organic compound to give a matting effect.

GB 1580358 describes coating powder compositions of hydroxyl terminated polyester resins with a low acid number, and metal organic compounds as additives.

The subject of the present invention is the surprising discovery that aluminium organic compounds alone can act as matting agents in coating powders comprising carboxyl terminated polyester resins.

The invention provides a thermosetting coating powder comprising a resin which consists essentially of a carboxyl-terminated polyester resin having an acid number of at least 15 (mg KOH/g resin) and a curing agent for the resin, waxes being omitted, wherein there is present an aluminium organic compound which is an aluminium alkoxide or a compound derivable from an aluminium alkoxide by a substitution or condensation reaction, and which is in a concentration of 0.1 - 20% by weight on the combined weights of resin and curing agent to modify the surface finish of the cured coating.

The carboxyl terminated polyester resins used in the coating powders of this invention may be conventional, and may or may not be chosen from among the following:

| Trade Mark | Acid No. | Tₛ (°C) | Supplied by |
|---|---|---|---|
| Grilesta P7304 | 28-34 | 66 | EMS Grillon |
| P7305 | 30-36 | 61 | |
| P7307 | 30-36 | 61 | |
| Crylcoat 430 | 30 | 70 | UCB |
| 342 | 30 | 65 | |
| E2273 | 30 | 59 | |
| Uralac P3400 | 30-37 | 63 | DSM Resins |
| P3500 | 33-38 | 58 | |
| P2200 | 48-55 | 62 | |
| P3700 | 33-40 | 57 | |
| P4200 | 33-38 | 58 | |
| P4400 | 32-38 | 54 | |

The carboxyl terminated polyester resin has an acid number of at least 15, preferably 20-55 and more preferably 30-40, (mg KOH/g resin). Often, the resin will have a hydroxyl number of not more than 10 preferably less than 5.

The thermosetting coating powders of this invention are preferably suitable to apply exterior durable paint coatings. In such compositions, which should preferably not contain epoxy resins, the polyester resins have traditionally been cured by means of modified epoxies such as TGIC (triglycidyl isocyanurate). More recently so-called non-toxic curing agents based on β-hydroxyalkylamides have become available, such as that marketed by EMS Grillon under the Trade mark Primid XL552 having the structure

(OH.CHR.CH₂)₂NCO.R₂CO.N(CH₂.CHR.OH)₂

Such curing agents are within the scope of this invention. The nature of the curing agent used is not material to the invention.

The aluminium organic compound is an aluminium alkoxide or a compound derivable from an aluminium alkoxide by a substitution or condensation reaction. There is preferably used an aluminium organic compound including at least one group 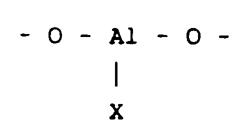 where X is derived from HX which is an alcohol or phenol, a carboxylic acid, a 1,3-diketone, an alkyl acetoacetate or an alkyl half-ester of a dicarboxylic acid and may be unsubstituted or substituted.

The aluminium organic compound (AOC) may include one or two hydroxyl groups attached to Al. Or the AOC may have the formula AlX₃, where X is defined above. Or the AOC may contain more than one Al atom per molecule, by virtue of having the formula

[-Oₚ-Al-X_{q}]n,

where p is less than 1.5,
q equals 3-2p, and
n is 2 or more.
X is derived from HX which may be water but is organic in at least one position in the molecule and is preferably:
   - a C1 to C30 aliphatic alcohol or a phenol which may be substituted;
   - a C1 to C30 carboxylic acid, which may be aliphatic, alicyclic or aromatic and which may be substituted;
   - a 1, 3-diketone such as acetylacetone;
   - a C1 to C12 alkyl acetoacetate, which may be substituted in the alkyl group;
   - a C1 to C12 alkyl half-ester of a C1 to C12 aliphatic, alicyclic or aromatic dicarboxylic acid, which may be substituted.

In all cases, X may be the same or different at different positions of the molecule.

As substituents in the above, Cl to C12 alkoxy groups and C1 to C4 dialkyl amino groups are envisaged among others.

Alkyl acetoacetates have the formula CH₃COCH₂COOR, where R is C1 to C12 alkyl. They are believed to co-ordinate to Al through both oxygen atoms, in similar manner to carboxylates and to acetylacetone.

Examples of various AOC's within the above general classes are set out below in numbered paragraphs 1 to 8.

### 1. Aluminium tri-alkoxides

1.1 Al monobutoxyethoxide di-isopropoxide
1.2 Al monoisopropoxide (2-methylpentan-2,4-diolate)
1.3 Al triisopropoxide
1.4 Al tri sec. butoxide
1.5 Al tri methoxypropoxide
1.6 Al tristearyloxide
1.7 Al tri 2-methylpentoxide
1.8 Al tri 2-methylbutoxide
1.9 Al triethoxyaminate

### 2. Monosubstituted Al.dialkoxides

2.1 Al diisopropoxide mono(ethylacetoacetate)
2.2 Al diisopropoxide mono(monoisopropylmaleate/ fumarate)
2.3 Al diisopropoxide mono(monoisopropylphthalate)
2.4 Al diisopropoxide mono(acetylacetonate)

### 3. Disubstituted Al monoalkoxides

3.1 Al monoisopropoxide di(ethylacetoacetate)
3.2 Al monoisopropoxide mono(ethylacetoacetate)mono (monoisopropylmaleate)
3.3 Al monomethoxypropoxide monoethylacetoacetate dimethylamino ethoxide
3.4 Al monoisopropoxide monoethylacetoacetate monoacetate
3.5 Al monoisopropoxide monohydroxide monoversatate
3.6 Al monoisopropoxide di(acetylacetonate)

### 4. Aluminium tri-acetylacetonate

### 5. Aluminium tri-ethylacetoacetate

### 6. Oxo aluminium alkoxides

6.1 Oxo aluminium ethoxypropoxide
6.2 Oxo aluminium butoxyethoxide

### 7. Oxo Al acyloxides and enolates

7.1 Oxo aluminium mono(ethylacetoacete)
7.2 Oxo aluminium 2-ethylhexoate
7.3 Oxo aluminium stearate

### 8. Aluminium acyloxides

8.1 Dihydroxy Al monostearate
8.2 Monohydroxy Al di stearate
8.3 Al monoacetate diethylacetoacetate
8.4 Al tristearate

All these AOC's have at least one substituent, an alkoxide or an oxo linkage, which is capable of addition or substitution reaction with a carboxylic acid group of the resin with which it is compounded, to provide a reaction product resistant to hydrolysis or dissociation. These AOC's may also have an ester substituent which, we have discovered, can transesterify with any hydroxyl groups present in the resin.

The AOC's may have the property of enhancing the gloss finish of the cured coating at low levels of AOC addition. At higher levels they will usually provide a reduced gloss surface finish, of the kind often described as satin, semi-gloss, semi-matt, matt or dead matt, and may thus be referred to as matting agents. The amount of AOC used is generally 0.1 - 20%, e.g. 0.5 - 10%, preferably 1 - 5%, by weight on the combined weights of resin and curing agent. If the concentration is too low, little surface modification results. If the concentration is too high, the physical properties of the cured coating may be adversely affected. The use of an AOC according to this invention may permit the amount of curing agent to be less than would otherwise be required. It is thus envisaged that in certain cases the AOC may be used in partial or even total replacement of the curing agent. Alternatively, use of an AOC together with a standard amount of curing agent may permit the time or temperature of cure to be somewhat reduced.

It is preferred that the carboxyl terminated polyester be the only resin present in major amount. The invention is not concerned with mixed resin systems, such as epoxy-polyester or even hydroxypolyester - carboxypolyester systems. Similarly it is preferred that the AOC be the only texturing or matting agent present in major amount. In particular, waxes have disadvantages as noted above, and are best omitted.

The coating powder is in particulate form. For fluidized bed coating, particles above 70 mesh (210 microns) are generally removed. For electrostatic spray methods, finer particles are generally preferred, e.g. which pass a 100 mesh (149 micron) sieve but are retained on a 325 mesh (44 micron) sieve. Curing agents are generally present in proportions from 1 to 25% or 40% by weight on the weight of the resins Other conventional ingredients for thermosetting coating powders, such as pigments, mineral and organic extenders, flow additives, wetting agents and accelerators, may be present in conventional concentrations.

Coating powders can be formulated by dryblending or more preferably by melt-mixing. In melt-mixing the ingredients are intensively mixed, then melt compounded at 80-105°C and rapidly cooled to prevent thermosetting reaction. The cooled ribbon is broken into small chips suitable for fine grinding. It is a surprising discovery that AOC's do not cause premature gelation at the elevated temperature required for the melt-mixing process. In liquid paint manufacture for example, AOC's are found to be highly reactive with carboxyl groups even at room temperature.

AOC's which are liquid can be made more compatible with the remaining ingredients by adsorption onto the surface of a particulate extender or pigment such as silica, aluminium hydroxide or titanium dioxide; AOC's can act as dispersing aids by coating the particles of extenders or pigment and making them more compatible with the resin. Masterbatch techniques may be needed to achieve uniform dispersion of curing agents.

AOC's may act as water scavengers, by reacting with any moisture adsorbed on pigment or extender. This may have several effects:
- oxo-aluminium organic compounds may be formed in situ rather than being added deliberately.
- solvent may be released by the reaction. This may lower the viscosity of the resin during compounding, which may permit the use of simpler machinery or higher filler loadings.

Conventional coating techniques can be used, including fluidized bed coating, hot flocking, electrostatic fluidized bed coating, and preferably electrostatic spray coating. This latter technique is well adapted for automatic operation to apply uniform coatings of standard thickness from 25 to 2500 microns. In contrast to liquid paints, with electrostatic powder coating, too much material cannot be applied and a fully coated part is obtained even where the parts are complex in shape.

The following examples illustrate the invention.

### Comparative Example

### Matt Control Formulation (Traditional Technique)

### Component A

| | pbw |
|---|---|
| P2504 | 480 |
| B1530 | 120 |
| CL2310 | 250 |
| Resiflow PV5 | 10 |

P2504 is a commercially available hydroxylated polyester from DSM Resins.

B1530 is a blocked isocyanate curing agent from Hüels.

CL2310 is titanium dioxide from Kronos. Resiflow PV5 is a flow agent from Worlee Chemie.

The components were premixed in a polyethylene bag by shaking and melt compounded in a Baker Perkins MP 2000 twin screw extruder.

### Component B

| | pbw |
|---|---|
| P2400 | 558 |
| PT810 | 42 |
| CL2310 | 250 |
| Resiflow PV5 | 10 |

P2400 is a commercially available carboxylated polyester from DSM Resins.

PT810 is a triglycidyl isocyanurate (TGIC) curing agent from Ciba-Geigy.

The components were compounded as for Component A.

### Mixed Polyester System

| | |
|---|---|
| Component A | 100 pbw |
| Component B | 100 pbw |

Equal parts of extrudates of Component A and Component B were ground together in a pin disk mill and sieved through 125 µm screen. The resultant powder was applied to aluminium and steel panels using a Volstatic electrostatic spray gun and the coated panels were stoved at 200°C for 10 minutes (peak metal temperature). The stoved coatings had a smooth satin finish with good mechanical properties.

### Example 1

| | pbw |
|---|---|
| P2400 | 558 |
| PT810 | 42 |
| AOC 3.3 | 42.8 (70:30 silica) |
| CL2310 | 250 |
| PV5 | 10 |

AOC 3.3 aluminium monomethoxypropoxide monoethylacetoacetate dimethylaminoethoxide, is a viscous liquid and was absorbed onto Aerosil 200 fumed silica (Degussa) in the ratio 70/30 p.b.w., prior to compounding with the other ingredients.

The components were melt compounded in a twin screw extruder at 95°C set barrel temperature, applied to panels and stoved as for Matt Control formulation.

The coating had a matt, slightly textured appearance with good mechanical properties.

For comparison, the formulation was made up using the equivalent amount of fumed silica without AOC (i.e. 13 parts by weight). The coating obtained did not have a matt finish. This confirms that the matting effect is due to the AOC rather than to the silica.

### Example 2

Various AOC's were tested as matting agents with two different carboxyl-terminated polyesters and a range of pigments. Results demonstrate improved matt finish (lower gloss %) with increasing quantity of AOC matting additive.

Uralac P2400 used in General Formulation I and Table I below is the carboxylated polyester as above. Acid No. 30-37.

Grilesta P7309.3 in General Formulation II and Table II is another commercially available carboxylated polyester. Acid No. 30-36.

Components were premixed then melt compounded in a twin screw extruder with the barrel temperature set at 95°C, applied to panels and stoved, as previously.

### AOC Matting Additives

- AOC 1: Aluminium diisopropoxide mono(ethylacetoacetate) (2.1)
- 2: Aluminium monoisopropoxide di(ethylacetoacetate) (3.1)
- 3: Aluminium tri(ethylacetoacetate) (5)
- 4: Aluminium tri-stearyloxide (1.6)
- 5: Aluminium tri-acetylacetonate (4)
- 6: Aluminium tri-stearate (8.4)
- 7: Aluminium monoisopropoxide monohydroxide monoversatate (3.5)
- 8: Aluminium monoisopropoxide di(acetylacetonate) (3.6)
- 9: Aluminium monomethoxypropoxide monoethylacetoacetate dimethylaminoethoxide (3.3)

AOC's 1, 3 and 9 being viscous liquids were absorbed onto Aerosil 200 amorphous silica in the ratio 70pbw AOC:30 pbw silica prior to compounding with other ingredients.

### General Formulation I

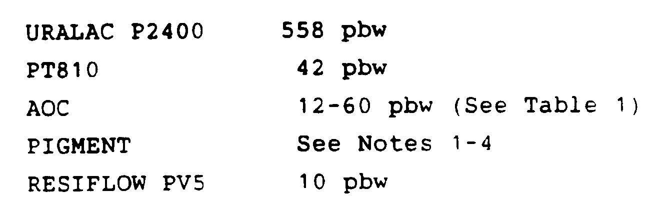

### General Formulation II

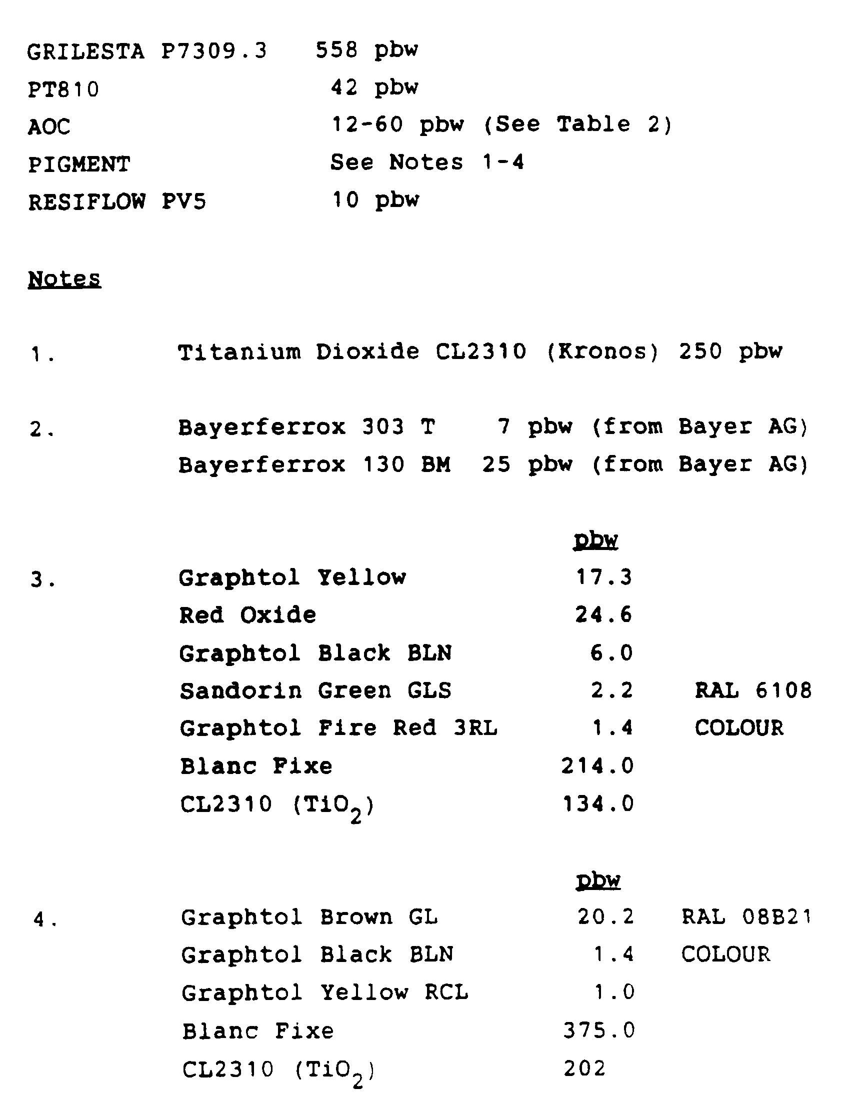

Apart from the TiO₂, all reagents are from Sandoz.

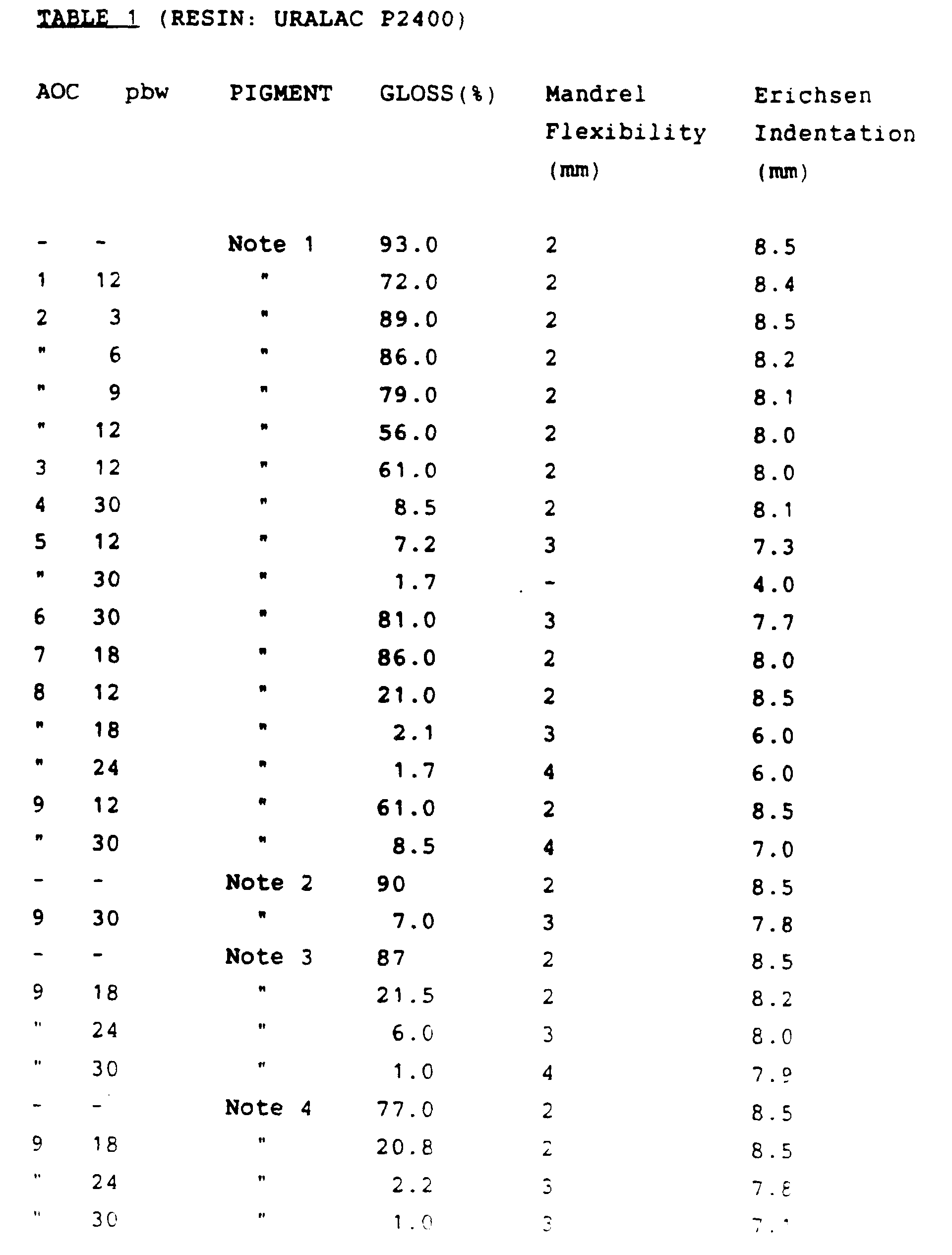

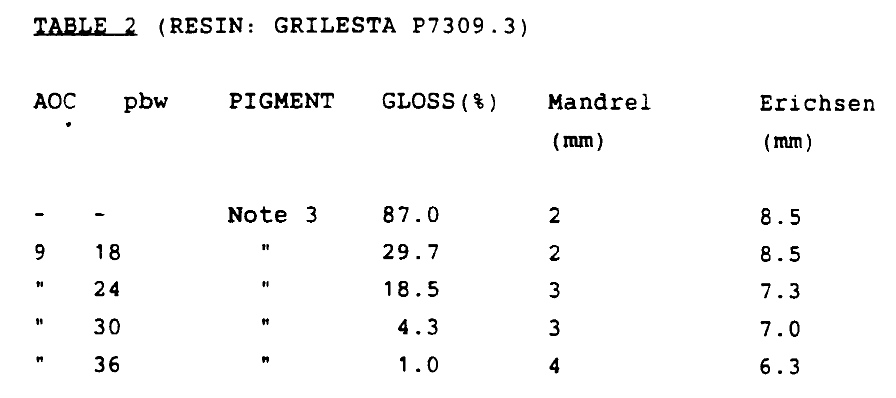

### Test Methods

a). Gloss (%) at 60° angle to BS3900 D5 (Pull gloss = 100% Dead Matt = 0%).
b). Mandrel Flexibility (mm) to BS3900 E1 (Quoted as smallest Mandrel which can be used without cracking. Low values are best).
c). Erichsen Slow Indentation to BS 3900 E4 (Quoted as Indentation until the onset of cracking. High values are best).

### Example 3

The following formulation uses a different curing agent.

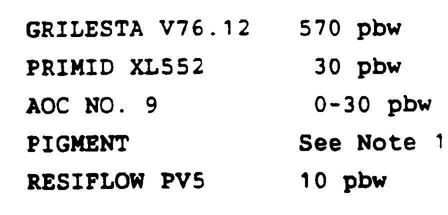

Grilesta V76.12 is a commercially available carboxylated polyester. Acid No. 34, Tₛ 62°C.

Primid XL552 is a curing agent based on a β-hydroxyalkylamide and has the formula

(OH.CHR.CH₂)₂NCO.R₂CO.N(CH₂.CHR.OH)₂.

Grilesta V76.12 and Primid XL552 are supplied by EMS Grillon.

## Claims

1. A thermosetting coating powder comprising a resin which consists essentially of a carboxyl-terminated polyester resin having an acid number of at least 15 (mg KOH/g resin) and a curing agent for the resin, waxes being omitted, wherein there is present an aluminium organic compound which is an aluminium alkoxide or a compound derivable from an aluminium alkoxide by a substitution or condensation reaction, and which is in a concentration of 0.1 - 20% by weight on the combined weights of resin and curing agent to modify the surface finish of the cured coating.

2. A thermosetting coating powder as claimed in Claim 1, wherein the aluminium organic compound includes at least one group 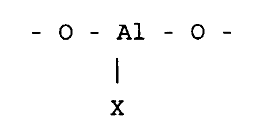 where X is derived from HX which is an alcohol or phenol, a carboxylic acid, a 1,3-diketone, an alkyl acetoacetate or an alkyl half-ester of a dicarboxylic acid, may be unsubstituted or substituted and may be the same or different at different positions of the molecule.

3. A coating powder as claimed in Claim 2, wherein the aluminium organic compound has the formula AlX₃.

4. A coating powder as claimed in Claim 2 or Claim 3, wherein at least one group X is derived from an alkyl or alkoxyalkyl acetoacetate or acetylacetone.

5. A coating powder as claimed in any one of Claims 1 to 4, wherein the aluminium organic compound is present at a concentration of 1 - 10 parts by weight per 100 parts by weight of resin.

6. A thermosetting coating powder as claimed in any one of Claims 1 to 5, wherein the nature and concentration of the aluminium organic compound is such as to provide a reduced gloss surface finish of the cured coating.

7. A thermosetting coating powder as claimed in any one of claims 1 to 6, wherein the polyester resin has an acid number greater than 20.

8. A method of powder coating a workpiece, which method comprises applying the thermosetting coating powder of any one of Claims 1 to 7 to the workpiece by an electrostatic spray coating technique and curing the resin to form a coating on the workpiece.

9. Use of the thermosetting coating powder claimed in any one of Claims 1 to 7 to form a cured coating having a reduced gloss surface finish.

## Patentansprüche

1. Hitzehärtbares Beschichtungspulver, das ein Harz umfasst, das im wesentlichen aus einem mit Carboxyl beendeten Polyesterharz mit einer Säurezahl von wenigstens 15 (mg KOH/g Harz) besteht, und einem Aushärtungsmittel für das Harz, wobei Wachse weggelassen werden, in dem eine organische Aluminiumverbindung vorhanden ist, die ein Aluminiumalkoxid oder eine Verbindung ist, die von einem Aluminiumoxid durch eine Substitution oder eine Kondensationsreaktion abgeleitet werden kann, und die mit einer Konzentration von 0,1 - 20 Gewichts% auf den kombinierten Gewichten des Harzes und des Aushärtungsmittels liegt, um die Oberflächenbeschaffenheit der ausgehärteten Beschichtung zu modifizieren.

2. Hitzehärtbares Beschichtungspulver nach Anspruch 1, in dem die organische Aluminiumverbindung wenigstens eine Gruppe 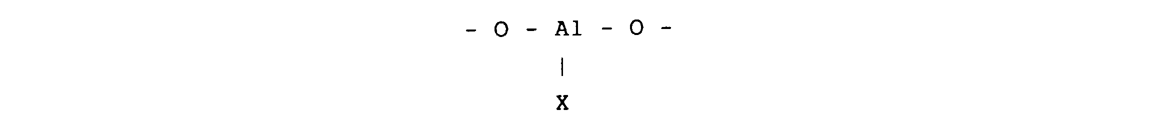 einschließt, in der X von HX abgeleitet ist, das ein Alkohol oder ein Phenol ist, eine Carbonsäure, ein 1,3-Diketon, ein Alkylacetoacetat oder ein Alkyl-Halbester einer Dicarbonsäure, das nicht substituiert oder substituiert sein kann, und das an verschiedenen Stellungen des Molekäls gleich oder verschieden sein kann.

3. Beschichtungspulver nach Anspruch 2, in dem in dem die organische Aluminiumverbindung die Formel AlX₃ hat.

4. Beschichtungspulver nach Anspruch 2, in dem wenigstens eine Gruppe X von einem Alkyl oder Alkoxyalkylacetoacetat oder -acetylaceton abgeleitet ist.

5. Beschichtungspulver nach einem der Ansprüche 1 bis 4, in dem die organische Aluminiumverbindung in einer Konzentration von 1 bis 10 Gewichtsteilen pro 100 Gewichtsteilen Harz vorhanden ist.

6. Hitzehärtbares Beschichtungspulver nach einem der Ansprüche 1 bis 5, in dem das Wesen und die Konzentration der organischen Aluminiumverbindung derart ist, daß sie eine verringerte Glanzoberflächenbeschaffenheit der ausgehärteten Beschichtung liefert.

7. Hitzehärtbares Beschichtungspulver nach einem der Ansprüche 1 bis 6, in dem das Polyesterharz eine Säurezahl größer als 20 hat.

8. Verfahren zur Pulverbeschichtung eines Werkstücks, wobei das Verfahren umfasst, das hitzehärtbare Beschichtungspulver von einem der Ansprüche 1 bis 7 auf das Werkstück durch eine elektrostatische Spritzbeschichtungstechnik aufzutragen und das Harz auszuhärten, um eine Beschichtung auf dem Werkstück zu bilden.

9. Benutzung des hitzehärtbaren Beschichtungspulvers nach einem der Ansprüche 1 bis 7, um eine ausgehärtete Beschichtung mit einer verringerten Glanzoberflächenbeschaffenheit zu bilden.

## Revendications

1. Poudre de revêtement thermodurcissable comportant une résine qui consiste essentiellement de résine polyester à terminaison carboxylique dont l'indice acide est au minimum 15 (mg KOH/g de résine) et un produit durcisseur de résine, à l'exclusion de cires, prévoyant la présence d'un composé organique d'aluminium sous forme d'alkoxyde d'aluminium ou d'un composé relevant d'un dérivé d'alkoxyde d'aluminium par l'intermédiaire d'une réaction de substitution ou de condensation, et en concentration de 0,1 - 20% des poids combinés de résine et d'agent de prise pour modifier l'état de surface du revêtement durci.

2. Poudre de revêtement thermodurcissable telle que revendiquée à la revendication 1, dont le composé organique d'aluminium prévoit au minimum un groupe 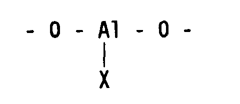 dont X dérive de HX qui est un alcool ou un phénol, un acide carboxylique, une dicétone 1,3, un alcoyle acéto-acétate ou un demi-ester alcoyle d'acide dicarboxylique, peut être substitué ou non et peut être le même ou différent en diverses positions de la molécule.

3. Poudre de revêtement telle que revendiquée à la revendication 2, dont le composé organique d'aluminium comporte la formule AlX₃.

4. Poudre de revêtement telle que revendiquée à la revendication 2 ou à la revendication 3, dont un groupe X au minimum est dérivé d'un alcoyle ou d'un alcoyle ou d'acétyle acétone.

5. Poudre de revêtement telle que revendiquée à l'une ou l'autre des revendications 1 à 4, dont le composé organique d'aluminium est prévu en concentration de 1 - 10 parts par poids par 100 parts par poids de résine.

6. Poudre de revêtement thermodurcissable telle que revendiquée à l'une ou l'autre des revendications 1 à 5, dont la nature et la concentration du composé organique d'aluminium sont telles à assurer une finition de brillance atténuée du revêtement étuvé.

7. Poudre de revêtement thermodurcissable telle que revendiquée en l'une quelconque des revendications de 1 à 6, dont la résine de polyester comporte un indice d'acide supérieur à 20.

8. Mode d'application sur une pièce d'une poudre de revêtement, ladite méthode comportant l'application du revêtement thermodurcissable selon l'une quelconque des revendications de 1 à 7, par l'intermédiaire d'une technique de pulvérisation de revêtement et le durcissage de la résine pour un revêtement sur la pièce.

9. L'exploitation d'une poudre de revêtement thermodurcissable telle que revendiquée à l'une quelconque des revendications de 1 à 7, pour former un revêtement de finition d'état de surface de brillance atténuée.
